# EUROPEAN PATENT SPECIFICATION

(11) **EP 0 637 202 B1**
(45) Date of publication and mention of the grant of the patent: **15.01.1997**
(21) Application number: 93917394.4
(22) Date of filing: 05.02.1993
(51) Int. Cl.: A01N 25/04, A01N 47/38

(54) **LIQUID PESTICIDAL FORMULATIONS**
FLÜSSIGE PESTIZIDE FORMULIERUNGEN
FORMULATIONS PESTICIDES LIQUIDES

(30) Priority: 18.02.1992 GB 9203429
(43) Date of publication of application: 08.02.1995
(73) Proprietor: AGREVO UK LIMITED, Saffron Walden, Essex CB10 1XL (GB)
(72) Inventor: FAERS, Malcolm Andrew, Saffron Walden, Essex CB10 1XL (GB); KEEPING, Stuart Alan, Saffron Walden, Esssex CB10 1XL (GB)
(74) Representative: Waldman, Ralph David
(86) International application number: EP9300285
(87) International publication number: WO9315605

(56) References cited:
- EP-A- 0 261 492
- EP-A- 0 281 398
- EP-A- 0 357 559
- EP-A- 0 432 061
- EP-A- 0 432 062
- EP-A- 0 505 053
- GB-A- 2 059 773
- US-A- 4 349 379
- US-A- 4 411 694
- DATABASE WPI Week 8047, Derwent Publications Ltd., London, GB; AN 80-83651C (47)
- CHEMICAL PATENTS INDEX, DOCUMENTATION ABSTRACTS JOURNAL Section Ch, Week 8908, 19 April 1989 Derwent Publications Ltd., London, GB; Class C, AN 89-057667/08
- DATABASE WPI Week 9234, Derwent Publications Ltd., London, GB; AN 92-277150(34)
- O.-A.NEUMUELLER 'Römpps Chemie-Lexikon' 1979 , FRANCKH , STUTTGART, DE vol. 1: A-Cl,see page 242: "Antioxidantien"

## Description

### Field of the invention

This invention relates to novel formulations of pesticides.

Pesticides are commonly formulated as emulsifiable concentrates, in which the active ingredient is dissolved in an organic solvent, such as xylene and mixed with various emulsifying and wetting agents, whereby the resulting concentrate, on dilution with water, forms an emulsion of the pesticide in water which can then be sprayed, e.g. onto crops.

It is now becoming increasingly desirable for environmental, safety and/or cost reasons, that part at least of the organic solvent in such formulations is replaced by water. One way of achieving this would be to have a concentrate comprising the pesticide in a reduced amount of water-immiscible solvent, or even no solvent at all, which is emulsified in water. However, when trying to form concentrates of this type, some pesticides, especially those which are low-melting solids, tend to crystallise on standing and such formulations cannot be re-constituted to give a product of uniform concentration. Thus even if the farmer can remove crystals which would otherwise rapidly clog up spraying apparatus, he is left with a formulation which cannot be applied uniformly to his crop and is therefore wholly unacceptable. This problem is particularly acute with the fungicide having the common name prochloraz, which is N-propyl-N-[2-(2,4,6-trichlorophenoxy)ethyl]imidazole-1-carboxamide.

In EP 357 559, there are disclosed aqueous formulations of pesticides which have a very low solubility in water. The formulation consists of an aqueous emulsion and contains particular phenols in order to stabilise the emulsion and prevent crystallisation of the pesticide.

We have now found that certain other aromatic compounds are particlarly valuable in inhibiting the crystallisation of a pesticide from a liquid formulation.

Thus, according to the invention, there is provided a liquid pesticidal formulation which comprises a pesticidal compound, one or more pesticidally acceptable carriers and as a crystallisation inhibitor, benzene containing two or three hydroxy groups and substituted by one or more lower alkyl groups.

The invention is particularly applicable to oil in water emulsion formulations which also comprise one or more surfactants and/or emulsion stabilisers.

The invention can also be applied to other formulation types, such as microemulsions and emulsifiable concentrates.

The invention also applies to co-formulations. This is particularly applicable to formulations containing two or more pesticidal compounds, in which case, at least one of the pesticidal compounds may be present as a fine particulate solid.

For example an oil in water emulsion of one or more pesticides may be combined with a suspension concentrate of a solid compound suspended in an aqueous medium to give a formulation known as a suspoemulsion.

The pesticidal compound in the formulation of the invention is generally a low-melting compound, e.g. having a melting point of -10 to +60°C. The invention is particularly applicable to formulating compounds containing a carbonyl group, e.g. prochloraz. If desired the compositions can include two or more pesticides, e.g. other triazole fungicides such as cyproconazole or fluquinconazole, or morpholine fungicides such as fenpropimorph or fenpropidin.

A wide range of crystallisation inhibitors may be suitable. Examples of suitable compounds include catechol, resorcinol and hydroquinone, substituted by one or more C₁₋₆-alkyl groups (e.g. 4-tert.-butylcatechol or tert.-butyl-hydroquinone).

Surfactants may be any of those commonly used in the art and are preferably nonionic surfactants, anionic surfactants or a blend of nonionic and anionic surfactants.

Nonionic surfactants include for example, ethoxylated alkylphenols, such as optionally terminally blocked alkylphenol ethoxylates; ethoxylated aliphatic alcohols; ethoxylated amines; ethoxylated fatty acids and fatty acid esters; ethoxylated alkylolamides; block polymers/copolymers of ethylene oxide and propylene oxide; alkylolamides and ethoxylated/propoxylated alkyl phenols or fatty alcohols.

Anionic compounds include for example, sulphonates such as alkylaryl sulphonates or petroleum sulphonates; sulphates such as alcohol sulphates or other sulphates; phosphate esters; or sulphosuccinates.

Emulsion stabilisers are well known and are generally polymeric products e.g. polyvinyl alcohol/polyvinyl acetate copolymers.

Generally, the formulation also includes a hydrocarbon solvent. Suitable solvents include for example aromatic hydrocarbons such as alkylbenzenes, e.g. xylene, trimethylbenzenes, methylethylbenzenes, dimethylethylbenzenes, diethylbenzenes, tetramethylbenzenes, pentamethylbenzenes, naphthalene and various methylnaphthalenes and mixtures thereof.

If desired, other conventional formulation additives can be included, such as antifreeze e.g. ethylene or propylene glycol.

The composition usually comprises from 30-70%, preferably 40-50%, weight by volume of pesticidal compound; from 5-20% weight by volume of crystallisation inhibitor; from 0-15%, preferably 5-15%, weight by volume of surfactant; 0-10% weight by volume antifreeze; 0-10% weight by volume of emulsion stabiliser; 0-45%, preferably 5-30%, weight by volume of hydrocarbon solvent and 20-40% weight by volume water.

The invention is illustrated in the following examples.

### Example 1

Oil in water emulsion formulations were prepared by mixing the following ingredients:

| | % w/v | |
|---|---|---|
| | A (invention) | B (comparison) |
| prochloraz | 45 | 45 |
| Mowiol 3-83¹ | 2.0 | 2.0 |
| Genapol C100² | 2.5 | 2.5 |
| Hoe-S-3510³ | 3.0 | 3.0 |
| Proxel XL2⁴ | 0.2 | 0.2 |
| Propylene glycol | 6.5 | 6.5 |
| 4-methylcatechol | 10 | 0 |
| Solvesso 200⁵ | 10 | 20 |
| water | to 100 | to 100 |

| | | |
|---|---|---|
| ¹ = polyvinyl alcohol | | |
| ² = coconut fatty alcohol/ethylene oxide condensate | | |
| ³ = alkoxyethylene oxide/propylene oxide condensate | | |
| ⁴ = 1,2-benzisothiazolin-3-one (preservative) | | |
| ⁵ = methylnaphthalene fraction | | |

Samples were stored at various temperatures and the stability of the formulation observed, particularly for crystal formation. To encourage crystal formation, samples were seeded with crystals of prochloraz. After 2 weeks at -5°, 4°C and 8°C, the formulations were examined for crystallisation, by filtering through a 150 micron sieve. Formulation A gave acceptable prochloraz residue levels of 0.015, 0.018 and 0% w/w, whilst formulation B gave unacceptable prochloraz residue levels of 3.0, 0.17 and 0.016% w/w respectively. Even after this short period, it can be seen that the prochloraz crystal residues present in formulation B would clog spray equipment whilst those in formulation A would not. After 5 weeks storage, the residue levels in formulations A were unchanged whereas those in formulation B had increased further. Both formulations were physically stable, i.e. no breaking of the emulsion had occurred.

Thus even though formulation B comprised more solvent than formulation A, lack of the catechol allowed extensive crystallisation of prochloraz to occur. The presence of the crystallisation inhibitor is thus essential in formulations of this type.

### Example 2

Formulations similar to formulation A in Example 1 were prepared in which the 4-methylcatechol was replaced by 5, 10 and 15% tert.-butylhydroquinone and the Solvesso was adjusted to 15, 10 and 5% respectively. The samples were stored at various temperatures and observed for stability of the formulation and particularly for crystal formation. Similar good inhibition of crystallisation and stability of the formulations was observed, as with the formulation A in Example 1.

### Example 3

A suspension concentrate (SC) containg fluquinconazole was prepared by mixing the following ingredients

| | % w/v |
|---|---|
| fluquinconazole | 50 |
| Polyfon H⁶ | 2 |
| Synperonic PE/P75⁷ | 3 |
| propylene glycol | 10.5 |
| Proxel XL2 | 0.3 |
| xanthan gum | 0.2 |
| water to | 100 |

| | |
|---|---|
| ⁶ = sodium lignosulfonate | |
| ⁷ = ethylene oxide/propylene oxide/ethylene oxide block copolymer | |

This was then combined with an oil in water emulsion formulation prepared from prochloraz and fenpropidin to give a suspoemulsion of the following composition:

| | % w/v |
|---|---|
| prochloraz | 20 |
| fenpropidin | 18.8 |
| fluquinconazole SC | 10.4 |
| Mowiol 3-83 | 1 |
| Genapol C100 | 2 |
| Hoe-S-3510 | 2.5 |
| Proxel XL2 | 0.075 |
| propylene glycol | 5 |
| t-butylhydroquinone | 2.2 |
| Solvesso 200 | 6.7 |
| xanthan gum | 0.075 |
| water to | 100 |

This formulation was tested for stability in a similar manner to that described in Example 1 and compared with a similar formulation in which the t-butylhydroquinone was absent but contained 10% Solvesso 200. After 4 weeks at -5°, the formulation of the invention showed prochloraz residue levels of 0.05% w/w, whilst the formulation contining no t-butylhydroquinone gave unacceptable prochloraz residue levels of 1.4% w/w after only 2 weeks.

### Example 4

The fluquinconazole SC described in Example 3 was combined with an oil in water emulsion formulation prepared from prochloraz to give a suspoemulsion of the following composition:

| | % w/v |
|---|---|
| prochloraz | 26.7 |
| fluquinconazole SC | 13.9 |
| Mowiol 3-83 | 1.2 |
| Genapol C100 | 1.5 |
| Hoe-S-3510 | 1.7 |
| Proxel XL2 | 0.2 |
| propylene glycol | 10.8 |
| t-butylhydroquinone | 3 |
| Solvesso 200 | 8.9 |
| clay thickener | 1.6 |
| water to | 100 |

Similar good inhibition of crystallisation and stability of the formulations was observed, as with the formulation of the invention in Example 3.

## Claims

1. A liquid pesticidal formulation which comprises at least one pesticidal compound, one or more pesticidally acceptable carriers and as a crystallisation inhibitor, benzene containing two or three hydroxy groups and substituted by one or more lower alkyl groups.

2. A formulation according to claim 1 which comprises water.

3. A formulation according to claim 2 which is an oil in water emulsion formulation and comprises one or more surfactants and/or emulsion stabilisers.

4. A formulation according to claim 2 or 3, which also includes a hydrocarbon solvent.

5. A formulation according to any one of the preceding claims, which comprises prochloraz as a pesticidal compound.

6. A formulation according to any one of the preceding claims, which comprises 30-70% weight by volume of pesticidal compound; from 5-20% weight by volume of crystallisation inhibitor; from 0-15%, weight by volume of surfactant; 0-10% weight by volume antifreeze; 0-10% weight by volume of emulsion stabiliser; 0-45%, weight by volume of hydrocarbon solvent and 20-40% weight by volume water.

7. A formulation according to claim 6 which comprises 40-50% weight by volume of pesticidal compound; 5-15% weight by volume of surfactant and 5-30% weight by volume of hydrocarbon solvent.

8. A formulation according to any one of the preceding claims in which the crystallisation inhibitor is catechol, resorcinol or hydroquinone, substituted by one or more C₁₋₆-alkyl groups.

## Patentansprüche

1. Pestizide Formulierung enthaltend mindestens eine pestizid wirksame Verbindung, eine oder mehrere mit dem Pestizid verträgliche Trägerstoffe und als Kristallisationsinhibitor mit zwei oder drei Hydroxygruppen und einer oder mehr Niederalkylgruppen substituiertes Benzol.

2. Formulierung gemäß Anspruch 1 enthaltend Wasser.

3. Formulierung gemäß Anspruch 2 enthaltend Wasser in einer Öl-in-Wasser-Emulsion und ein oder mehrere oberflächenaktive Stoffe und/oder Emulsionsstabilisatoren.

4. Formulierung gemäß Anspruch 2 oder 3 enthaltend darüber hinaus ein Kohlenwasserstoff-Lösungsmittel.

5. Formulierung gemäß einem der vorstehenden Ansprüche enthaltend Prochloraz als Pestizid.

6. Formulierung gemäß einem der vorstehenden Ansprüche enthaltend 30-70 Vol.-% einer pestiziden Verbindung; 5-20 Vol.-% eines Kristallisationsinhibitors; 0-15 Vol.-% eines oberflächenaktiven Stoffes; 0-10 Vol.-% eines Frostschutzmittels; 0-10 Vol.-% eines Emulsionsstabilisators; 0-45 Vol.-% eines Kohlenwasserstoff-Lösungsmittels und 20-40 Vol. Wasser.

7. Formulierung gemäß Anspruch 6 enthaltend 40-50 Vol.-% einer pestiziden Verbindung, 5-15 Vol.-% eines oberflächenaktiven Stoffes und 5-30 Vol.-% eines Kohlenwasserstoff-Lösungsmittels.

8. Formulierung gemäß einem der vorstehenden Ansprüche enthaltend als Kristallisationsinhibitor mit einer oder mehr C₁₋₆-Alkylgruppen substituiertes Brenzkatechin, Resorcin oder Hydrochinon.

## Revendications

1. Formulation pesticide liquide qui comprend au moins un composé pesticide, un ou plusieurs excipients acceptables de manière pesticide et comme inhibiteur de cristallisation, un benzène contenant deux ou trois radicaux hydroxyle et substitué par un ou plusieurs radicaux alcoyle inférieurs.

2. Formulation suivant la revendication 1, qui comprend de l'eau.

3. Formulation suivant la revendication 2, qui est une formulation de type émulsion huile-dans-eau et qui comprend un ou plusieurs tensioactifs et/ou stabilisants d'émulsion.

4. Formulation suivant la revendication 2 ou 3, qui comprend également un solvant hydrocarboné.

5. Formulation suivant l'une quelconque des revendications précédentes, qui comprend du prochloraz comme composé pesticide.

6. Formulation suivant l'une quelconque des revendications précédentes, qui comprend de 30 à 70% en poids par volume de composé pesticide; de 5 à 20% en poids par volume d'inhibiteur de cristallisation; de 0 à 15% en poids par volume de tensioactif; de 0 à 10% en poids par volume d'antigel; de 0 à 10% en poids par volume de stabilisant d'émulsion; de 0 à 45% en poids par volume de solvant hydrocarboné et de 20 à 40% en poids par volume d'eau.

7. Formulation suivant la revendication 6, qui comprend de 40 à 50% en poids par volume de composé pesticide; de 5 à 15% en poids par volume de tensioactif et de 5 à 30% en poids par volume de solvant hydrocarboné.

8. Formulation suivant l'une quelconque des revendications précédentes, dans laquelle l'inhibiteur de cristallisation est le catéchol, le résorcinol ou l'hydroquinone, substitué par un ou plusieurs radicaux alcoyle en C₁₋₆.
